# FASCICULE DE BREVET EUROPEEN

(11) **EP 2 359 047 B1**
(45) Date de publication et mention de la délivrance du brevet: **31.05.2017**
(21) Numéro de dépôt: 09771340.8
(22) Date de dépôt: 09.12.2009
(51) Int. Cl.: F16L 33/32, F16L 37/098, F16L 47/30

(54) **CONNECTEUR, SYSTÈME ET PROCÉDÉ DE RACCORDEMENT DE DEUX ORGANES HYDRAULIQUES**
VERBINDER, SYSTEM UND VERFAHREN ZUR VERBINDUNG VON ZWEI HYDRAULISCHEN GLIEDERN
CONNECTOR, SYSTEM AND METHOD FOR CONNECTING TWO HYDRAULIC MEMBERS

(30) Priorité: 12.12.2008 FR 0858515
(43) Date de publication de la demande: 24.08.2011
(73) Titulaire: Compagnie Méditerranéenne des Cafés, 06510 Carros (FR)
(72) Inventeur: BLANC, Jean-Pierre, F-06000 Nice (FR); GOERING, Alain, F-06000 Nice (FR)
(74) Mandataire: Decobert, Jean-Pascal
(86) Numéro de dépôt international: PCT/EP2009/066676
(87) Numéro de publication internationale: WO 2010/066763

(56) Documents cités:
- WO-A-93/20772
- FR-A- 2 829 219
- FR-A- 2 862 740
- US-A1- 2007 180 608

## Description

La présente invention concerne un connecteur pour le raccordement de deux organes hydrauliques d'une machine de préparation de boissons. Elle concerne également un système et un procédé de raccordement de tels organes hydrauliques.

Les machines de préparation de boissons comportent communément un circuit d'eau chauffée ou non apte à réaliser une infusion ou une solubilisation d'une matière de préparation de boissons telle que la mouture de café, des feuilles de thé hachées ou encore du café en granulés solubles pour préparations instantanées.

La présente invention s'inscrit dans le cadre de telles machines pour raccorder différents composants hydrauliques entre eux et en particulier, à titre non limitatif, une chaudière à un tuyau d'amenée de l'eau chauffée à un circuit d'infusion sous pression.

Dans ce domaine, les contraintes de montage des éléments du circuit d'eau sont élevées notamment en terme de respect des conditions alimentaires et d'hygiène, de résistance à la température et à la pression.

Il est aussi nécessaire de permettre un montage efficace des composants du circuit hydraulique.

A ce sujet, les systèmes existants ne donnent pas entière satisfaction. Le document EP-A1-0428341 révèle que le montage des différents éléments à raccorder est complexe et que l'étanchéité est hasardeuse. Le document FR 2 829 219 - A1 révèle un raccord pré-assemblé pour raccorder de manière étanche un tube de transport de fluide et un embout. Il existe donc un besoin d'optimiser la facilité et la fiabilité des étapes de raccordement de deux organes hydrauliques. Ce besoin est d'autant plus important que la tendance actuelle est au recyclage et au remplacement des pièces usagées des machines, ce qui implique des étapes de démontage et de remontage en nombre pour les professionnels de la maintenance.

La présente invention s'inscrit dans ce cadre et propose un connecteur, un système de raccordement et un procédé de raccordement améliorés.

Selon l'invention, un connecteur assure la connexion entre deux organes hydrauliques et ce, par une insertion latérale sur au moins l'un des organes en question. Dans le cas où l'organe de raccordement est constitué par l'extrémité d'un tuyau, il suffit d'insérer le tuyau dans le connecteur par l'intermédiaire d'une ouverture longitudinale que ce dernier comprend pour réaliser un ensemble prêt à être rapporté sur le deuxième organe hydraulique, par exemple l'embouchure d'une chaudière. L'invention offre aussi la possibilité de réaliser la mise en place du connecteur après avoir fait coopérer les embouchures des deux organes hydrauliques à relier. Dans cette variante, dans le cas d'une chaudière et d'un tuyau de raccordement, on met en place le tuyau dans l'embouchure de la chaudière et, tout en les maintenant en position, on rapporte le connecteur sur les deux organes.

On comprend aisément que cette réalisation est hautement plus pratique que les systèmes actuels nécessitant d'enfiler une bague filetée de connexion dans le sens longitudinal des tuyaux.

L'invention s'inscrit particulièrement bien dans un contexte de recyclage des produits et d'éco-conception.

Les éléments composant l'ensemble du raccordement sont remplaçables individuellement et le démantèlement en vue du recyclage peut s'opérer par un véritable tri sélectif.

D'autres buts et avantages apparaîtront au cours de la description qui suit qui présente un mode de réalisation préféré de l'invention cependant sans aucun caractère limitatif.

Avant cette description détaillée, il est rappelé que la présente invention concerne un connecteur pour le raccordement de deux organes hydrauliques d'une machine de préparation de boissons, comportant des premiers moyens d'assemblage aptes à coopérer avec un premier organe hydraulique et des deuxièmes moyens d'assemblage aptes à coopérer avec le deuxième organe hydraulique caractérisé par le fait qu'il comporte un corps muni d'une ouverture longitudinale autorisant un montage par insertion latérale sur au moins l'un des premier et deuxième organes hydrauliques.

Suivant des modes de réalisation préférés mais uniquement indicatifs, ce connecteur est tel que :
- les premiers moyens d'assemblage comportent au moins deux pattes de clipsage,
- les deux pattes de clipsage sont situées de part et d'autre de l'ouverture,
- le corps comporte une base solidaire des pattes de clipsage, et d'une portion d'appui apte à s'appliquer sur le deuxième organe hydraulique,
- le connecteur comporte pour chaque patte un prolongement situé dans la continuité de la patte et à l'opposé des pattes relativement à la base,
- la portion d'appui comporte une partie intérieure située du même côté que les pattes de clipsage relativement à la base,
- la portion d'appui comporte une partie extérieure située à l'opposé des pattes de clipsage relativement à la base,
- la partie extérieure est prolongée au niveau de l'ouverture longitudinale par deux ailes de préhension,
- les ailes vont en s'écartant l'une de l'autre vers l'extérieur du corps,
- la partie extérieure comporte un rétrécissement au niveau de sa jonction avec la base,
- le corps est fait d'une seule pièce déformable élastiquement pour augmenter la largeur de l'ouverture longitudinale.

L'invention concerne également un système de raccordement de deux organes hydrauliques d'une machine de préparation de boissons, comportant un moyen de connexion formé à l'embouchure de chacun des organes hydrauliques caractérisé par le fait qu'il comporte un connecteur selon l'invention dont les premiers moyens d'assemblage coopèrent avec le moyen de connexion du premier organe hydraulique et les deuxièmes moyens d'assemblage coopèrent avec le moyen de connexion du deuxième organe hydraulique.

Ce système de raccordement présente éventuellement les caractéristiques additionnelles non limitatives suivantes :
- il comporte un moyen de connexion formé à l'embouchure de chacun des organes hydrauliques comportant un connecteur selon l'invention dont les premiers moyens d'assemblage coopèrent avec le moyen de connexion du premier organe hydraulique et les deuxièmes moyens d'assemblage coopèrent avec le moyen de connexion du deuxième organe hydraulique,
- l'embouchure du premier organe hydraulique comporte un rebord constitutif du moyen de connexion,
- l'embouchure du deuxième organe hydraulique a une forme tubulaire et comporte sur sa surface externe un bourrelet constitutif du moyen de connexion,
- l'extrémité de l'embouchure du deuxième organe hydraulique située au-delà du bourrelet est évasée,
- le canal interne de l'embouchure du premier organe hydraulique est configuré pour permettre l'insertion de l'embouchure du deuxième organe hydraulique,
- une surface de butée dans l'embouchure du premier organe hydraulique pour limiter l'insertion de l'embouchure du deuxième organe hydraulique,
- le système comporte un joint intercalé entre la paroi du canal interne de l'embouchure du premier organe hydraulique et la surface externe de l'embouchure du deuxième organe hydraulique,
- le bourrelet est appliqué sur le joint par un côté du bourrelet et sur la bordure des moyens d'assemblage avec le deuxième organe hydraulique par l'autre côté du bourrelet.

L'invention concerne également un procédé de raccordement de deux organes hydrauliques à une machine de préparation de boissons, apte à être mis en oeuvre par le système selon l'invention caractérisé par le fait qu'il comporte les étapes suivantes :
- insertion du connecteur sur le deuxième organe hydraulique par un mouvement latéral relativement à l'axe de l'embouchure de sorte que l'embouchure du deuxième organe hydraulique pénètre dans le corps du connecteur par l'ouverture longitudinale,
- insertion de l'embouchure du deuxième organe hydraulique dans l'embouchure du premier organe hydraulique,
- translation du connecteur en direction de l'embouchure du premier organe hydraulique,
- solidarisation du moyen de connexion de l'embouchure de chacun des organes hydrauliques avec les moyens d'assemblage correspondants du connecteur.

Suivant une possibilité avantageuse, ce procédé est tel qu'on déforme élastiquement le corps pour augmenter la largeur de l'ouverture longitudinale du corps du connecteur lors de l'insertion du connecteur sur le deuxième organe hydraulique.

Les dessins ci-joints sont donnés à titre d'exemples et ne sont pas limitatifs de l'invention. Ils représentent seulement un mode de réalisation de l'invention et permettront de la comprendre aisément.
La figure 1 présente en perspective une possibilité de réalisation du connecteur de l'invention.
La figure 2 offre une vue en perspective d'un organe hydraulique sous forme d'élément tubulaire du type tuyau.

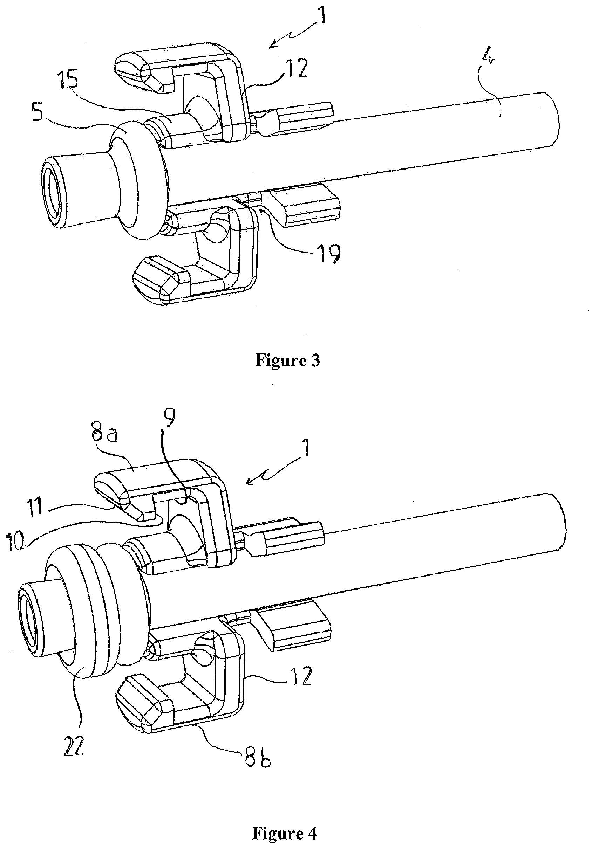

La figure 3 montre en perspective la coopération entre l'organe hydraulique de la figure 2 et le connecteur de l'invention.
La figure 4 illustre le mode de réalisation de la figure 3 avec un joint d'étanchéité rapporté.
La figure 5 présente la coopération de l'ensemble de la figure 4 avec un autre organe hydraulique.
La figure 6 est une vue en coupe montrant cette coopération.
Les figures 7 et 8 illustrent une variante du connecteur.
Les figures 9 et 10 illustrent une autre variante.

Les modes de réalisation décrits en détail ci-après en référence aux figures présentent le cas non limitatif d'un raccordement entre un premier organe hydraulique 3 sous forme de chaudière ou de réservoir tampon et un deuxième organe hydraulique 4 sous forme d'un élément de tuyau par exemple en matière plastique du type PTFE, polypropylène, polyéthylène ou polyamide. Ce cas est donné uniquement à titre d'illustration et l'invention peut permettre le raccordement d'autres organes hydrauliques dans des machines de préparation de boissons.

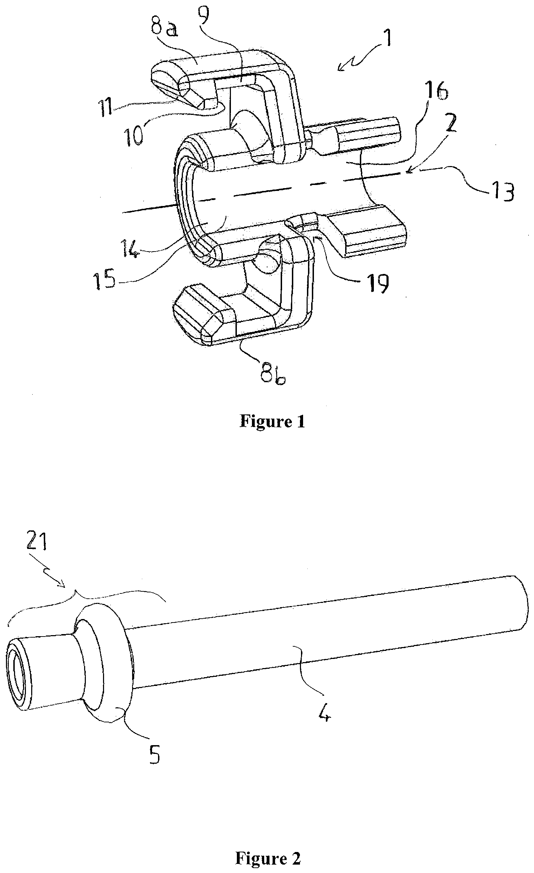

Dans le reste de la description, on entend par direction longitudinale la direction illustrée au repère 13 en figure 1 correspondant au sens de la longueur du corps 1 du connecteur également usuellement correspondant avec l'axe de l'embouchure 6 de premier organe hydraulique 3 et de l'embouchure 21 du deuxième organe hydraulique 4 (ici sous forme de tuyau cylindrique creux).

Un mouvement latéral est défini relativement à la direction longitudinale 13 par un mouvement ayant au moins une composante perpendiculaire à l'axe 13.

Par ailleurs, le terme embouchure s'entend ici de l'extrémité d'un organe hydraulique au niveau de laquelle s'effectue le raccordement avec un autre organe pour assurer la continuité de la circulation fluidique.

Le connecteur présenté en figure 1 est constitué par un corps 1 avantageusement en matière plastique polymère ayant les caractéristiques mécaniques suffisantes de tenue comme le polyamide (Pa) renforcé par fibre de verre, le Polybutylène Téréphtalate (PBT) renforcé, le Polysulfone (PSU), le Polypropylène renforcé (PP) renforcé, le Polyéthylène (PE) renforcé, réalisé de manière monobloc par exemple par injection. Le corps 1 définit un passage suivant l'axe longitudinal 13 dans lequel vient l'embouchure 21 du deuxième organe hydraulique 4. Cette insertion s'effectue par l'intermédiaire d'une ouverture longitudinale 2 apparaissant en figure 1 de sorte à éviter systématiquement le recours à un enfilage du connecteur autour du deuxième organe hydraulique 4.

Une possibilité avantageuse consiste à prévoir que le corps 1 est déformable élastiquement de sorte que la largeur de l'ouverture longitudinale peut être augmentée suffisamment pour assurer l'insertion du deuxième organe hydraulique, puis pour le corps 1 reprenne sa position de repos en appui sur l'organe hydraulique 4.

Dans le cas illustré, la largeur de l'ouverture longitudinale 2 parcourt un secteur angulaire suivant la section du corps de l'ordre de 90°.

Cette dernière valeur n'est pas limitative mais avantageusement inférieure à 180° pour optimiser le maintien en position du connecteur. Pour assurer son maintien longitudinal sur le deuxième organe hydraulique 4, le corps 1 comporte dans l'exemple représenté une portion d'appui 14 réalisant dans le cas de l'exemple un contact cylindre sur cylindre sur le deuxième organe hydraulique 4.

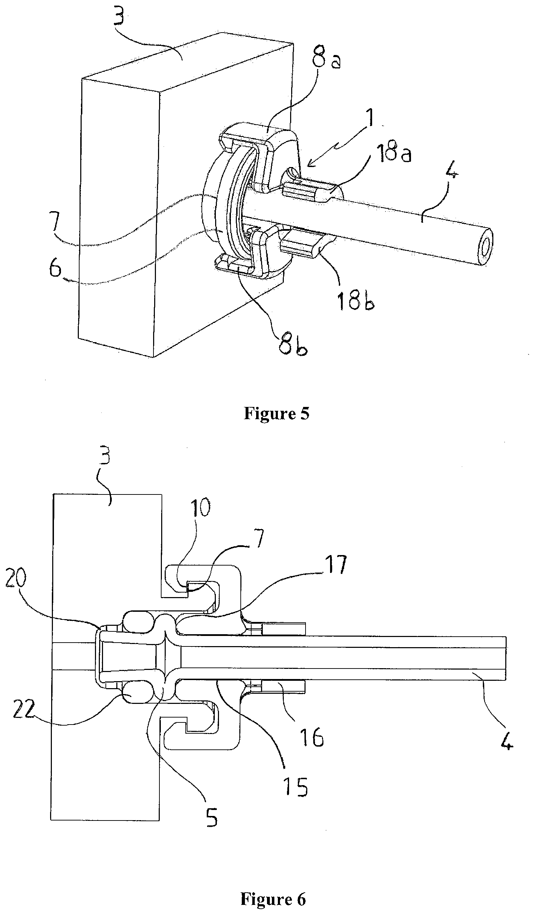

La portion d'appui 14 est ici constituée en deux parties autour d'une base 12 du corps 1. L'une des parties, dénommée partie intérieure 15, est orientée en direction de l'embouchure 6 du premier organe hydraulique 3. La partie 15 peut participer à la résistance de la liaison en produisant un contact intérieur avec l'embouchure 6. L'autre partie, appelée partie extérieure 16, est située de l'autre côté de la base 12. La partie extérieure 16 est plus accessible à l'utilisateur et comporte avantageusement deux ailes 18a, 18b repérées en figure 5 et situées dans le prolongement de la portion 16 pour faciliter la manipulation du connecteur. Dans le cas représenté, les ailes 18a, 18b vont en s'écartant lorsque l'on s'éloigne de l'axe longitudinal 13 ce qui favorise l'insertion latérale sur le deuxième organe hydraulique 4 et la préhension par l'utilisateur de sorte à opérer un léger mouvement d'écartement de la portion d'appui 14 lors des étapes de montage et/ou de démontage.

Pour favoriser la déformation élastique du corps 1 durant ces étapes, la partie extérieure 16 comporte un rétrécissement 19 apparaissant en figure 1 au niveau de sa jonction avec la base 12. Cette partie de la portion d'appui 14 est par conséquent plus facilement déformable de sorte à amorcer les mouvements de démontage. Par ailleurs, une déformation élastique légèrement concentrée à ce niveau peut permettre de favoriser la désolidarisation des moyens d'assemblage du connecteur avec le premier organe hydraulique 3 comme cela sera exposé ci-après plus en détail.

Le mode de réalisation de l'embouchure 21 du deuxième organe hydraulique 4 présenté en figure 2 montre un bourrelet 5 ici formé par exemple dans la masse d'un élément de tuyau mais qui peut être rapporté sur celui-ci, le bourrelet servant de moyen de connexion apte à coopérer avec les moyens d'assemblage du connecteur. Plus précisément, dans la configuration illustrée, la bordure 17 intérieure de la portion d'appui 14 s'appuie sur l'un des côtés du bourrelet 5 comme représenté en figure 6.

Un mode de réalisation des moyens d'assemblage du connecteur avec le premier organe hydraulique 3 est détaillé dans le passage qui suit.

Deux pattes 8a, 8b déformables élastiquement sont raccordées à la base 12 de sorte à permettre un clipsage du corps 1 sur l'embouchure 6 du premier organe hydraulique 3. Une liaison par obstacle est formée par une surface d'appui 10 à l'extrémité des pattes 8a, 8b et par une portion d'un rebord 7 formé au niveau de l'embouchure. Telles qu'illustrées de façon non limitative en figure 5, deux pattes 8a, 8b sont avantageusement formées de manière diamétralement opposée suivant l'axe longitudinal 13 du corps 1. Elles sont ainsi opposées diamétralement. L'insertion des pattes 8a, 8b est facilitée par la déformation élastique d'une portion rétrécie des pattes 8a, 8b repérée 9 en figure 1 et par une portion d'introduction inclinée constituant une face inclinée 11 à l'extrémité distale de chacune des pattes 8a, 8b.

La mise en place des pattes 8a, 8b autour du rebord 7 s'effectue dans un mouvement longitudinal par déformation élastique des pattes 8a, 8b d'abord pour les écarter puis pour les rapprocher lorsque le rebord 7 est dépassé.

On a représenté une solution avec deux pattes 8a, 8b mais ce nombre n'est pas limitatif. La mise en position de verrouillage des pattes 8a, 8b s'opère avantageusement par simple translation du connecteur le long du deuxième organe hydraulique 4. Le déverrouillage peut être mis en oeuvre en écartant simultanément les pattes 8a, 8b, par exemple grâce à un outil à la forme d'une fourchette. La déconnexion est ainsi aisée mais ne peut se produire de manière intempestive par exemple du fait de vibrations, ce qui garantit la sécurité du raccordement.

Une variante consiste à former, dans le corps lui-même, des moyens de déformation élastique configurés pour écarter les pattes 8a, 8b au démontage.

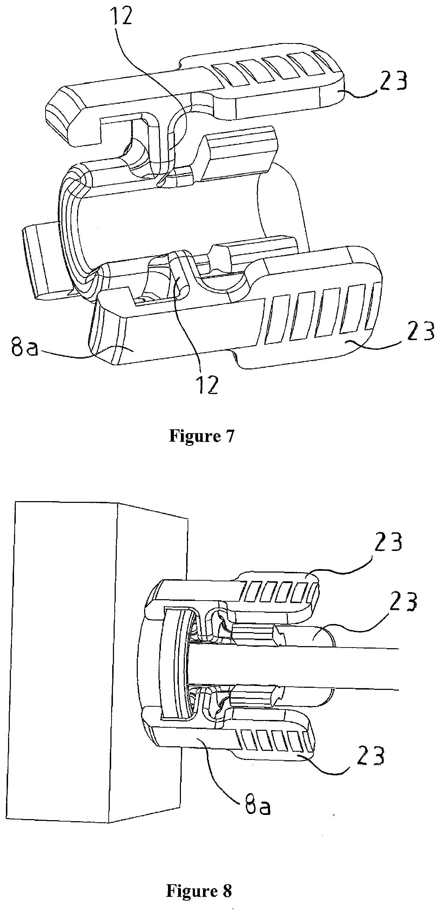

Les figures 7 et 8 illustrent cette possibilité avec des moyens sous forme de prolongements 23. Il peut s'agir de prolongements 23 situés dans la continuité de chaque patte 8a, 8b, du côté opposé aux dites pattes 8a, 8b relativement à la base 12. Cela facilite l'extraction surtout lorsqu'il y a plus de deux pattes 8a, 8b. En effet, l'opérateur exerce dans ce cas une action de flexion des prolongements 23 lors de la préhension du corps 1 du connecteur de sorte que l'écartement des pattes 8a, 8b se produit simultanément. Comme dans l'exemple illustré par les figures 7 et 8, on peut former trois prolongements 23 espacés de 120°.

On notera que le système de raccordement ici proposé peut mettre en oeuvre une embouchure 21 du deuxième organe hydraulique 4 sous forme d'extrémité de tuyau présentant un évasement au-delà du bourrelet 5. Cette configuration facilite la rétention d'un joint 22 mis en place par enfilement du côté du bourrelet 5 opposé à son appui avec la bordure 17 de la portion d'appui 14.

On donne ci-après un exemple de montage du système de raccordement selon l'invention en particulier en référence à la figure 6.

Dans un premier temps, le connecteur est rapporté autour du deuxième organe hydraulique 4 par insertion au travers de l'ouverture longitudinale 2. Le bourrelet 5 limite les mouvements de translation du connecteur ainsi positionné.

Après cette phase ou auparavant un joint 22 d'un type classique (en particulier un joint torique) est enfilé suivant une direction longitudinale à l'extrémité de l'embouchure 21. Il est facilement maintenu en position par appui sur le bourrelet 5 et de par l'effet de l'extrémité évasée de l'embouchure 21.

Dans un deuxième temps l'embouchure 21 du deuxième organe hydraulique 4 est introduite dans le canal interne de l'embouchure 6 du premier organe hydraulique 3. Ce mouvement est avantageusement limité par une surface de butée 20 formée à l'intérieur du canal de l'embouchure 6. Par ailleurs, le joint 22 vient en appui sur une portion du canal, avantageusement avant la mise en butée de l'embouchure 21 sur la surface de butée 20.

Les phases de montage du connecteur sur le deuxième organe hydraulique et de l'insertion du deuxième organe hydraulique dans l'embouchure 6 peuvent être inversés.

Dans un mouvement supplémentaire, le connecteur est appliqué en translation en direction de l'embouchure 6 de sorte à clipser les pattes 8a, 8b sur le rebord 7.

Les dimensions de ce raccordement sont avantageusement configurées pour que le joint 22 soit légèrement sollicité en compression lorsque la connexion globale est effective c'est à dire que le connecteur est totalement assemblé avec le premier et le deuxième organes hydrauliques 3, 4.

La présence d'un joint 22 aux propriétés élastiques assure éventuellement, outre l'étanchéité, une liberté de mouvement résiduelle en liaison rotule entre les deux organes hydrauliques. Cela préserve l'étanchéité malgré d'éventuelles sollicitations latérales extérieures (par exemple du fait de la pression, de la dilatation thermique ou des vibrations) sur le deuxième organe hydraulique 4.

Une variante consiste à commencer le montage par l'enfilage du joint 22 sur le deuxième organe hydraulique 4, d'insérer l'embouchure 21 dans le canal interne de l'embouchure 6, puis à rapporter le connecteur sur l'ensemble ainsi maintenu en position par un mouvement latéral unique. Cette variante est en particulier applicable dans le cas où la portion d'appui 14 ne comporte pas de partie intérieure 15 s'insérant dans le volume intérieur de l'embouchure 6.

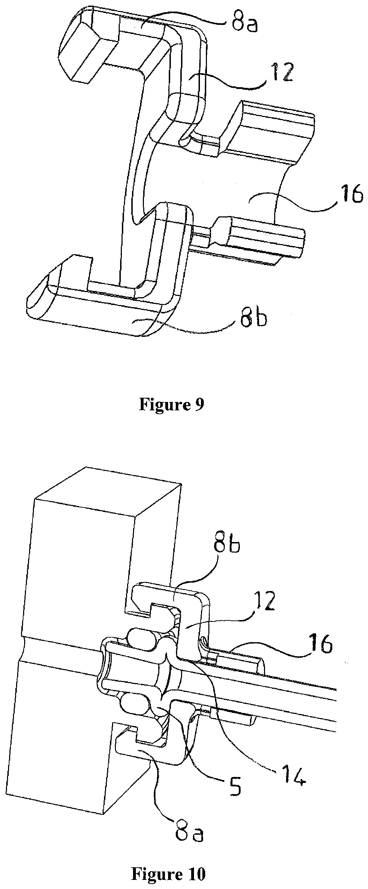

C'est le cas des modes de réalisation des figures 9 et 10 où la portion d'appui 14 s'étend vers l'extérieur uniquement avec une partie extérieure 16 saillante à partir de la base 12. Le bourrelet 5 s'applique alors contre la face interne de la base 12.

Le démontage est également rendu possible par le connecteur de l'invention. A cet effet, un procédé simple consiste à manipuler le corps 1 avec deux doigts chacun positionné respectivement sur l'une des ailes 18a, 18b de sorte à les écarter légèrement lors d'une déformation élastique. Cette déformation augmente la largeur de l'ouverture longitudinale 2 de sorte que le corps 1 peut s'échapper de son contact avec l'embouchure 21 du deuxième organe hydraulique 4. Les pattes 8a, 8b suivent le mouvement de déconnexion avec ou sans déformation élastique.

### REFERENCES

- 1.: Corps
- 2.: Ouverture longitudinale
- 3.: Premier organe hydraulique
- 4.: Deuxième organe hydraulique
- 5.: Bourrelet
- 6.: Embouchure
- 7.: Rebord
- 8a, 8b.: Pattes de clipsage
- 9.: Zone déformable
- 10.: Surface d'appui
- 11.: Face inclinée
- 12.: Base
- 13.: Axe longitudinal
- 14.: Portion d'appui
- 15.: Partie intérieure
- 16.: Partie extérieure
- 17.: Bordure
- 18a, 18b.: Ailes
- 19.: Rétrécissement
- 20.: Surface de butée
- 21.: Embouchure
- 22.: Joint
- 23.: Prolongement

## Revendications

1. Connecteur pour le raccordement de deux organes hydrauliques (3, 4) d'une machine de préparation de boissons, comportant des premiers moyens d'assemblage aptes à coopérer avec un premier organe hydraulique (3) et des deuxièmes moyens d'assemblage aptes à coopérer avec le deuxième organe hydraulique (4) **caractérisé par le fait que**
il comporte un corps (1) muni d'une ouverture longitudinale (2) autorisant un montage par insertion latérale sur au moins l'un des premier et deuxième organes hydrauliques (3, 4).

2. Connecteur selon la revendication 1 dans lequel les premiers moyens d'assemblage comportent au moins deux pattes de clipsage (8a, 8b).

3. Connecteur selon la revendication 2 comportant deux pattes de clipsage (8a, 8b) situées de part et d'autre de l'ouverture longitudinale (2).

4. Connecteur selon la revendication 2 ou 3 dans lequel le corps (1) comporte une base solidaire des pattes de clipsage (8a, 8b), et d'une portion d'appui (14) apte à s'appliquer sur le deuxième organe hydraulique (4).

5. Connecteur selon la revendication 4 comportant pour chaque patte (8a, 8b) un prolongement situé dans la continuité de la patte (8a, 8b) et à l'opposé des pattes (8a, 8b) relativement à la base (12).

6. Connecteur selon la revendication 4 et 5 dans lequel la portion d'appui (14) comporte une partie intérieure (15) située du même côté que les pattes de clipsage (8a, 8b) relativement à la base (12).

7. Connecteur selon la revendication 4 ou 5 ou 6 dans lequel la portion d'appui (14) comporte une partie extérieure (16) située à l'opposé des pattes de clipsage (8a, 8b) relativement à la base (12).

8. Connecteur selon la revendication 7 dans lequel la partie extérieure (16) est prolongée au niveau de l'ouverture longitudinale (2) par deux ailes de préhension (18a, 18b).

9. Connecteur selon la revendication 8 dans lequel les ailes (18a, 18b) vont en s'écartant l'une de l'autre vers l'extérieur du corps (1).

10. Connecteur selon la revendication 8 ou 9 dans lequel la partie extérieure (16) comporte un rétrécissement (19) au niveau de sa jonction avec la base (12).

11. Connecteur selon l'une quelconque des revendications 1 à 10 dans lequel le corps (1) est fait d'une seule pièce déformable élastiquement pour augmenter la largeur de l'ouverture longitudinale (2).

12. Système de raccordement de deux organes hydrauliques (3, 4) d'une machine de préparation de boissons, comportant un moyen de connexion formé à l'embouchure (6, 21) de chacun des organes hydrauliques (3, 4) **caractérisé par le fait qu'**il comporte un connecteur selon l'une des revendications précédentes dont les premiers moyens d'assemblage coopèrent avec le moyen de connexion du premier organe hydraulique (3) et les deuxièmes moyens d'assemblage coopèrent avec le moyen de connexion du deuxième organe hydraulique (4).

13. Système selon la revendication 12 dans lequel l'embouchure (6) du premier organe hydraulique (3) comporte un rebord (7) constitutif du moyen de connexion.

14. Système selon la revendication 12 ou 13 dans lequel l'embouchure (21) du deuxième organe hydraulique (4) a une forme tubulaire et comporte sur sa surface externe un bourrelet (5) constitutif du moyen de connexion.

15. Système selon la revendication 14 dans lequel l'extrémité de l'embouchure (21) du deuxième organe hydraulique (4) située au-delà du bourrelet (5) est évasée.

16. Système selon la revendication 13 en combinaison avec la revendication 14 ou 15 dans lequel le canal interne de l'embouchure (6) du premier organe hydraulique (3) est configuré pour permettre l'insertion de l'embouchure (21) du deuxième organe hydraulique (4).

17. Système selon la revendication 16 comportant une surface de butée (20) dans l'embouchure (6) du premier organe hydraulique (3) pour limiter l'insertion de l'embouchure (21) du deuxième organe hydraulique (4).

18. Système selon la revendication 16 ou 17 comportant un joint (22) intercalé entre la paroi du canal interne de l'embouchure (6) du premier organe hydraulique (3) et la surface externe de l'embouchure (21) du deuxième organe hydraulique (4).

19. Système selon la revendication 18 dans lequel le bourrelet (5) est appliqué sur le joint (22) par un côté du bourrelet (5) et sur la bordure des moyens d'assemblage avec le deuxième organe hydraulique (4) par l'autre côté du bourrelet (5).

20. Procédé de raccordement de deux organes hydrauliques (3, 4) à une machine de préparation de boissons, apte à être mis en oeuvre par le système selon l'une des revendications 12 à 19 **caractérisé par le fait qu'**il comporte les étapes suivantes :
- insertion du connecteur sur le deuxième organe hydraulique (4) par un mouvement latéral relativement à l'axe de l'embouchure (21) de sorte que l'embouchure (6) du deuxième organe hydraulique (4) pénètre dans le corps (1) du connecteur par l'ouverture longitudinale (2),
- insertion de l'embouchure (21) du deuxième organe hydraulique (4) dans l'embouchure (6) du premier organe hydraulique (3),
- translation du connecteur en direction de l'embouchure (6) du premier organe hydraulique (3),
- solidarisation du moyen de connexion de l'embouchure (6, 21) de chacun des organes hydrauliques (3, 4) avec les moyens d'assemblage correspondants du connecteur.

21. Procédé selon la revendication 20 dans lequel on déforme élastiquement le corps (1) pour augmenter la largeur de l'ouverture longitudinale (2) du corps (1) du connecteur lors de l'insertion du connecteur sur le deuxième organe hydraulique (4).

## Patentansprüche

1. Verbinder zur Verbindung von zwei hydraulischen Gliedern (3, 4) einer Getränkebereitungsmaschine, erste Befestigungsmittel umfassend, die imstande sind, mit einem ersten hydraulischen Organ (3) zusammenzuwirken und zweite Befestigungsmittel, die imstande sind, mit dem zweiten hydraulischen Organ (4) zusammenzuwirken, durch die Tatsache gekennzeichnet, dass er einen Korpus (1) umfasst, der mit einer länglichen Öffnung (2) versehen ist, der eine Montage durch seitliches Einführen in zumindest eines der ersten und zweiten hydraulischen Organe (3, 4) erlaubt.

2. Verbinder nach Anspruch 1, wobei die ersten Befestigungsmittel zumindest zwei Cliplaschen (8a, 8b) umfassen.

3. Verbinder nach Anspruch 2, zwei Cliplaschen (8a, 8b) umfassend, die sich beiderseits der länglichen Öffnung (2) befinden.

4. Verbinder nach Anspruch 2 oder 3, wobei der Korpus (1) eine Basis umfasst, die fest mit den Cliplaschen (8a, 8b) und einem Auflageabschnitt (14) verbunden ist, der imstande ist, sich am zweiten hydraulischen Organ (4) anzulegen

5. Verbinder nach Anspruch 4, für jede Cliplasche (8a, 8b) eine Verlängerung umfassend, die sich in der Fortsetzung der Lasche (8a, 8b) und gegenüber den Laschen (8a, 8b) im Verhältnis zur Basis (12) befindet.

6. Verbinder nach Anspruch 4 oder 5, wobei der Auflageabschnitt (14) einen inneren Abschnitt (15) umfasst, der sich auf derselben Seite wie die Cliplaschen (8a, 8b) im Verhältnis zur Basis (12) befindet.

7. Verbinder nach Anspruch 4 oder 5 oder 6, wobei der Auflageabschnitt (14) einen äußeren Abschnitt (16) umfasst, der sich gegenüber den Cliplaschen (8a, 8b) im Verhältnis zur Basis (12) befindet.

8. Verbinder nach Anspruch 7, wobei sich der äußere Abschnitt (16) auf Höhe der länglichen Öffnung (2) durch zwei Greifflügel (18a, 18b) fortsetzt.

9. Verbinder nach Anspruch 8, wobei sich die Greifflügel (18a, 18b) nach außerhalb des Korpus (1) voneinander entfernen.

10. Verbinder nach Anspruch 8 oder 9, wobei der äußere Abschnitt (16) eine Verjüngung (19) auf Höhe seiner Nahtstelle mit der Basis (12) umfasst.

11. Verbinder nach irgendeinem der Ansprüche 1 bis 10, wobei der Korpus (1) aus einem einzigen elastisch verformbaren Stück gefertigt ist, um die Breite der länglichen Öffnung (2) zu erhöhen.

12. System zur Verbindung von zwei hydraulischen Gliedern (3, 4) einer Getränkebereitungsmaschine, ein Anschlussmittel umfassend, welches an der Mündung (6, 21) eines jeden der hydraulischen Glieder (3, 4) gebildet wird,
durch die Tatsache gekennzeichnet, dass es einen Verbinder nach einem der vorhergehenden Ansprüche umfasst, dessen erste Befestigungsmittel mit dem Anschlussmittel des ersten hydraulischen Glieds (3) zusammenwirken und die zweiten Befestigungsmittel mit dem Anschlussmittel des zweiten hydraulischen Glieds (4) zusammenwirken.

13. System nach Anspruch 12, wobei die Mündung (6) des ersten hydraulischen Glieds (3) einen Rand (7) umfasst, der konstitutiv für das Anschlussmittel ist.

14. System nach Anspruch 12 oder 13, wobei die Mündung (21) des zweiten hydraulischen Glieds (4) eine rohrförmige Form aufweist und an ihrer Außenfläche einen Wulst (5) umfasst, der konstitutiv für das Anschlussmittel ist.

15. System nach Anspruch 14, wobei das Ende der Mündung (21) des zweiten hydraulischen Glieds (4), das sich jenseits des Wulstes (5) befindet, ausgestellt ist.

16. System nach Anspruch 13 in Kombination mit Anspruch 14 oder 15, wobei der interne Kanal der Mündung (6) des ersten hydraulischen Glieds (3) konfiguriert ist, um die Einführung der Mündung (21) des zweiten hydraulischen Glieds (4) zu erlauben.

17. System nach Anspruch 16, eine Anschlagfläche (20) in der Mündung (6) des ersten hydraulischen Glieds (3) umfassend, um die Einführung der Mündung (21) des zweiten hydraulischen Glieds (4) einzuschränken.

18. System nach Anspruch 16 oder 17, eine Dichtung (22) zwischen die Wand des internen Kanals der Mündung (6) des ersten hydraulischen Glieds (3) und der externen Fläche der Mündung (21) des zweiten hydraulischen Glieds (4) eingelegte Dichtung (22) umfassend.

19. System nach Anspruch 18, wobei der Wulst (5) mit einer Seite des Wulstes (5) an der Dichtung (22) angelegt wird, und mit der anderen Seite des Wulstes an der Kante der Befestigungsmittel mit dem zweiten hydraulischen Glied (4) angelegt wird.

20. Verfahren zur Verbindung von zwei hydraulischen Gliedern (3, 4) einer Getränkebereitungsmaschine, das imstande ist, durch das System nach einem der Ansprüche 12 bis 19 angewendet zu werden, durch die Tatsache gekennzeichnet, dass es die folgenden Schritte umfasst:
- Einführen des Verbinders am zweiten hydraulischen Glied (4) durch eine seitliche Bewegung im Verhältnis zur Achse der Mündung (21), sodass die Mündung (6) des zweiten hydraulischen Glieds (4) durch die längliche Öffnung (2) in den Korpus (1) des Verbinders eindringt,
- Einführen der Mündung (21) des zweiten hydraulischen Glieds (4) in die Mündung (6) des ersten hydraulischen Glieds (3),
- Translation des Verbinders in Richtung der Mündung (6) des ersten hydraulischen Glieds (3),
- Feste Verbindung des Befestigungsmittels der Mündung (6, 21) eines jeden der hydraulischen Glieder (3, 4) mit den entsprechenden Befestigungsmitteln des Verbinders.

21. Verfahren nach Anspruch 20, wobei man den Korpus (1) elastisch verformt, um die Breite der länglichen Öffnung des Korpus (1) des Verbinders beim Einführen des Verbinders am zweiten hydraulischen Glied (4) zu erhöhen.

## Claims

1. Connector for connecting two hydraulic members (3, 4) of a drinks-preparation machine, comprising first assembly means able to cooperate with a first hydraulic member (3) and second assembly means able to cooperate with a second hydraulic member (4), **characterised by** the fact that
it comprises a body (1) provided with a longitudinal opening (2) allowing mounting by lateral insertion on at least one of the first and second hydraulic members (3, 4).

2. Connector according to claim 1, in which the first assembly means comprise at least two snapping-on lugs (8a, 8b).

3. Connector according to claim 2, comprising two snapping-on lugs (8a, 8b) situated on either side of the longitudinal opening (2).

4. Connector according to claim 2 or claim 3, in which the body (1) comprises a base secured to the snapping-on lugs (8a, 8b) and a bearing portion (14) able to be applied to the second hydraulic member (4).

5. Connector according to claim 4, comprising, for each lug (8a, 8b), an extension situated in line with the lug (8a, 8b) opposite to the lugs (8a, 8b) relative to the base (12).

6. Connector according to claim 4 and claim 5, in which the bearing portion (14) comprises an internal part (16) situated on the same side as the snapping-on lugs (8a, 8b) relative to the base (12).

7. Connector according to claim 4 or claim 5 or claim 6, in which the bearing portion (14) comprises an external part (16) situated opposite to the snapping-on lugs (8a, 8b) relative to the base (12).

8. Connector according to claim 7, in which the external part (16) is extended at the longitudinal opening (2) by two gripping flanges (18a, 18b).

9. Connector according to claim 8, in which the flanges (18a, 18b) separate from each other towards the outside of the body (1).

10. Connector according to claim 8 or claim 9, in which the external part (16) comprises a narrowing (19) at its junction with the base (12).

11. Connector according to any of claims 1 to 10, in which the body (1) is made in a single elastically deformable piece in order to increase the width of the longitudinal opening (2).

12. System for connecting two hydraulic members (3, 4) of a drinks-preparation machine, comprising a connection means formed at the mouth (6, 21) of each of the hydraulic members (3, 4), **characterised by** the fact that it comprises a connector according to any of the preceding claims, the first assembly means of which cooperate with the connection means of the first hydraulic member (3) and the second assembly means of which cooperate with the connection means of the second hydraulic member (4).

13. System according to claim 12, in which the mouth (6) of the first hydraulic member (3) comprises a rim (7) constituting the connection means.

14. System according to claim 12 or claim 13, in which the mouth (21) of the second hydraulic member (4) has a tubular shape and comprises, on its external surface, a protrusion (5) constituting the connection means.

15. System according to claim 14, in which the end of the mouth (21) of the second hydraulic member (4) situated beyond the protrusion (5) is splayed.

16. System according to claim 13 in combination with claim 14 or claim 15, in which the internal channel of the mouth (6) of the first hydraulic member (3) is configured to allow the insertion of the mouth (21) of the second hydraulic member (4).

17. System according to claim 16, comprising a stop surface (20) in the mouth (6) of the first hydraulic member (3) in order to limit the insertion of the mouth (21) of the second hydraulic member (4).

18. System according to claim 16 or claim 17, comprising a seal (22) interposed between the wall of the internal channel of the mouth (6) of the first hydraulic member (3) and the external surface of the mouth (21) of the second hydraulic member (4).

19. System according to claim 18, in which the rim (5) is applied to the seal (22) by a side of the protrusion (5) and to the border of the means of assembly with the second hydraulic member (4) by the other side of the protrusion (5).

20. Method for connecting two hydraulic members (3, 4) to a drinks-preparation machine, able to be implemented by the system according to any of claims 12 to 19, **characterised by** the fact that it comprises the following steps:
- insertion of the connector on the second hydraulic member (4) by a lateral movement relative to the axis of the mouth (21) so that the mouth (6) of the second hydraulic member (4) enters the body (1) of the connector through the longitudinal opening (2),
- insertion of the mouth (21) of the second hydraulic member (4) in the mouth (6) of the first hydraulic member (3),
- translation of the connector in the direction of the mouth (6) of the first hydraulic member (3),
- securing of the means of connection of the mouth (6, 21) of each of the hydraulic members (3, 4) to the corresponding assembly means of the connector.

21. Method according to claim 20, in which the body (1) is elastically deformed in order to increase the width of the longitudinal opening (2) of the body (1) of the connector when the connector is inserted on the second hydraulic member (4).
